# EUROPEAN PATENT SPECIFICATION

(11) **EP 1 194 355 B1**
(45) Date of publication and mention of the grant of the patent: **18.08.2004**
(21) Application number: 00944475.3
(22) Date of filing: 19.05.2000
(51) Int. Cl.: B65G 53/52

(54) **TRANSPORT PIPE**
FÖRDERROHR
CONDUIT DE TRANSPORT

(30) Priority: 15.06.1999 SE 9902249
(43) Date of publication of application: 10.04.2002
(73) Proprietor: Envac Centralsug Aktiebolag, 117 84 Stockholm (SE)
(72) Inventor: HYDEN, Hans, S-162 46 Vällingby (SE)
(74) Representative: Hedman, Anders
(86) International application number: PCT/SE2000/001003
(87) International publication number: WO 2000/076891

(56) References cited:
- EP-A1- 0 803 456
- GB-A- 729 880
- SE-B- 409 019
- US-A- 3 425 749
- US-A- 4 621 953

## Description

### TECHNICAL FIELD

The present invention relates generally to pneumatic transport systems, and more specifically relates to a transport pipe for a pneumatic transport system. and a method of increasing the useful life of such a transport pipe.

A transport pipe with the features of the preamble of claim 1 is disclosed in document US-A-3 425 749.

### BACKGROUND

In the type of pneumatic transport systems that are intended above all for domestic waste and that are described in for instance our U.S. Patent Specifications 3 687 503 and 3 813 128, the waste is transported from the different insertion chutes in transport pipes that are laid substantially horizontally in the ground. The pipe diameter of such transport pipes is usually 300mm, 400mm or 500mm. The waste is transported at a relatively high velocity - the velocity may usually be approximately 18-24 m/s - and often contains hard and/or sharp fractions such as glass, pottery, metal, sand and soil. Such fractions will generally cause erosion, that is they will wear the pipe material. Such abrasion occurs to a less serious degree at the bottom of straight pipe sections, but becomes particularly serious at the bends and curves that are always present in such a transport system. At such positions the hard and sharp fractions will hit the wall of the bend with a substantial force. In principle such abrasion will occur distributed over the surface of the bend, but it will become particularly serious, that is deep, within a restricted area that, due to the influence of the centrifugal force, will be moved from the bottom of the pipe and up to its outer, with regard to the bend, side wall.

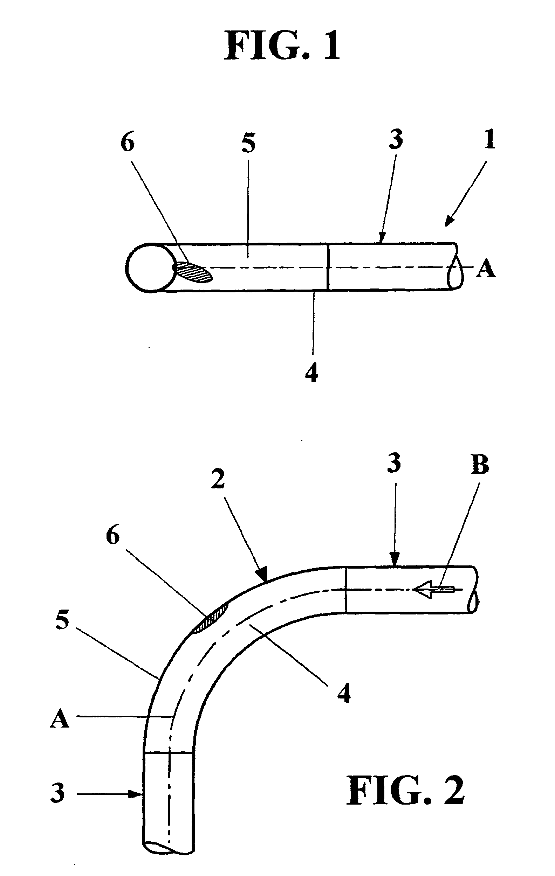

This restricted "waste impact area" where the wear of the pipe wall will be greatest is illustrated in the enclosed drawing figures 1 and 2, where a bend 2 of a conventional transport pipe 1 is illustrated from one side and in a plan view from above, respectively. The waste is transported in the direction B in a straight section that is preferably extended horizontally, but that may possibly also be inclined relative to the horizontal plane and may even be vertical.

Experience has shown that when the portions of the waste that contain the hard and sharp fractions enter a bend 2, they are moved up towards the outer side wall 5 by the centrifugal force, after having been transported or conveyed horizontally in contact substantially with the bottom wall 4. Thereby they hit the side wall 5 substantially within the indicated, restricted area that is designated by the reference number 6 in the drawings. This area refers to the illustrated situation where the radius of the bend is approximately three times the pipe diameter. Accordingly, the hard and sharp fractions will cause a relatively severe and deep erosion or abrasion within such a restricted area. Obviously the "impact area" could be extended or enlarged by increasing the radius of the bend, but many times this is not possible for design reasons. Moreover, such an increase of the radius leads to a significant increase of the costs, since the size of the bend increases correspondingly.

In particular, the wear caused by such erosion may become up to 20 times greater in a 90° bend than in a straight section of the pipe. Buyers of such so-called "refuse suction systems" make great demands, in particular on the useful life of the transport pipe laid down in the ground. Normally the requirement is a useful life of at least 30 years but requirements for a useful life of up to 60 years may be made especially where the pipe is laid under a building. In view of the above and with regard to the wear, the bends and curves of the pipe will be the critical points of the system.

Up to the present day, attempts to solve or at least minimize the above discussed problems within this technical field have predominantly aimed at providing the desired useful life through special manufacturing of the bends. Thereby, one alternative has been to manufacture the bends from the same material as the rest of the pipe, but with a much thicker wall. Another alternative has been to manufacture the bends from a specifically wear resistant material, such as a Ni-Hard-alloy. Both said solutions result in a substantial cost increase, especially in systems containing a large number of bends. Another way of solving said problem is suggested in our own Swedish Patent no. 409 019. This alternative method is likewise based upon a strengthening of the bend for the purpose of increasing the useful life thereof, but suggests a slightly different approach. According to said patent overlapping wear resistant inserts or plates are provided over at least the portion of a bend of the pipe, which is subjected to the erosive action of the hard and sharp fractions of the material. Said inserts are fixed to the inner circumferential surface of the transport pipe and are extended into the transport path of the material transported in the transport pipe for the purpose of reducing the wear of the pipe bend. The inserts each have a rear edge that is provided substantially on a level with and is fixed to the inner circumferential surface of the transport pipe, side edges being fixed to the inner circumferential surface of the transport pipe and a forward edge provided at a distance from the inner circumferential surface of the transport pipe. The inserts are preferably welded to the pipe wall and cause a considerable increase in costs, both with regard to material and work. Moreover, in most cases the last mentioned solution causes an undesirable reduction of the cross section area.

To sum up, it can therefore be established that the conventional solutions in themselves have performed their function in a satisfactory manner, but that they are all based on the principle of increasing the useful life of the bend by strengthening it. As has been discussed above, such a solution in all cases results in a substantially increased cost of the strengthened or reinforced bend, and this is a serious problem, not least in larger suction operated refuse systems containing a large number of bends.

### SUMMARY OF THE INVENTION

A basic object of the invention is therefore to provide a simple and yet appropriate way of combining a desired useful life of a bend in a transport pipe of the above indicated kind and a reasonable cost thereof. To be more precise, the object is to achieve this by permitting the use of a pipe bend having a wall thickness that is significantly reduced as compared to the prior art, and/or that is manufactured from a comparatively inexpensive material, for instance the same material as that of the remaining transport pipe.

The invention is based on the understanding that the need for the traditional reinforced pipe bend may be reduced by accomplishing a distribution of the wear or abrasion over a larger surface, that is by spreading or expanding the "impact area" of the heavily eroding material transported in the pipe. In other words, this means that the area of the bend that is exposed to the abrasive and eroding action of the transported hard and sharp material is in itself enlarged. Simultaneously, or as a result thereof, the depth of the wear or abrasion in each point of the wear surface, which is in itself expanded, will become significantly smaller than in the wear surface indicated in figs 1 and 2, where the most severe abrasion occurs when the conventional technique is employed. This will correspondingly increase the useful life of the transport pipe.

According to one aspect of the invention these basic objects are achieved by fixing a single active impact plate to the inner surface of the pipe, said impact plate extending into the transport path of the material transported in the pipe. Said single active impact plate is provided at a position just before, at or just after the junction between or transition from a substantially straight section and/to a bend of the transport pipe and has an upper impact surface that slopes away from the inner circumferential surface of the transport pipe so that an imaginary extension thereof forms an angle with a center axis of the transport pipe. In view of the fact that the plate serves as an impact surface for at least those portions of the arriving, transported material that contain the hard and sharp fractions and that from experience are also known to be heaviest, this material will change direction in what may be a called an unpredictable or random manner since separate units of the material will hit the plate at different angles and with different force: Through this spreading effect the different material units will hit the pipe bend distributed over an essentially larger area than in a traditional system, which in turn means that the useful life of the bend will be correspondingly extended.

Other advantageous embodiments of this aspect of the invention are specified in the respective dependent claims.

According to another aspect of the invention a method is provided for extending or increasing the useful life of a transport pipe of a pneumatic transport system containing at least one pipe bend. This is achieved by providing a single active impact plate in an area that lies just before, at or just after the junction between a substantially straight section and a bend of the transport pipe and by positioning said plate so that an upper impact surface thereof slopes away from the inner circumferential surface of the transport pipe so that an imaginary extension thereof forms an angle with a center axis of the transport pipe. Thereby the transport direction of at least portions of the material transported in the pipe is changed in an area extending from just before to just after the entry of the material into the bend and the above mentioned favorable effect is achieved of increasing the spreading of the impacts of the material portions or units, that is their "impact area", on the inner circumferential surface of the pipe bend, namely the extension of the useful life of the pipe bend.

In one embodiment of the method the plate is fixed to the inner circumferential surface of the transport pipe before the transport pipe is taken into operation, and then said plate is allowed to wear down, thereby obtaining the desired useful life.

In an alternative embodiment of the method the plate is retrofitted in an existing transport pipe after it has been put into operation, either for the purpose of supplementing existing systems or as a replacement for a previously mounted, worn out plate. When employing this method the pipe bend could also from the beginning be dimensioned for substantially half the desired useful life, whereby a plate is attached once the pipe bend has become worn to a certain, predetermined degree. In all of these cases the point of time for attaching the plate to the transport pipe can be determined based on a preset operating time of the pipe or subsequent to the detection of a specific, maximum permissible wear in the bend.

Further objects, features and advantages of the invention will appear from the dependent patent claims and from the following description of exemplifying embodiments.

### BRIEF DESCRIPTION OF THE DRAWINGS

The invention will now be described more closely in connection with the accompanying drawings, in which:
- Fig. 1: is a partial side view illustrating an area of wear in a bend for material transported in a conventional pneumatic transport pipe,
- Fig. 2: is a plan view from above of the transport pipe, illustrating the area of wear corresponding to fig. 1,
- Fig. 3a: in a view corresponding to that of fig. 1 illustrates the area of wear obtained when using a first embodiment of the invention,
- Fig. 3b: is a view of the transport pipe as seen from an open end thereof and in the embodiment of the invention illustrated in fig. 3a,
- Fig. 4a: in a view corresponding to that of fig. 2 illustrates the area of wear obtained when using the embodiment of the invention that is illustrated in figs. 3a and 3b,
- Figs. 4b-c: show a detailed view from above and a longitudinal section along line C-C, respectively of an impact plate used in the first embodiment of the invention, and
- Figs. 5a-d: illustrate alternative embodiments of the impact plate of the invention, as seen in views corresponding to that of fig. 3b.

### DESCRIPTION OF EMBODIMENTS

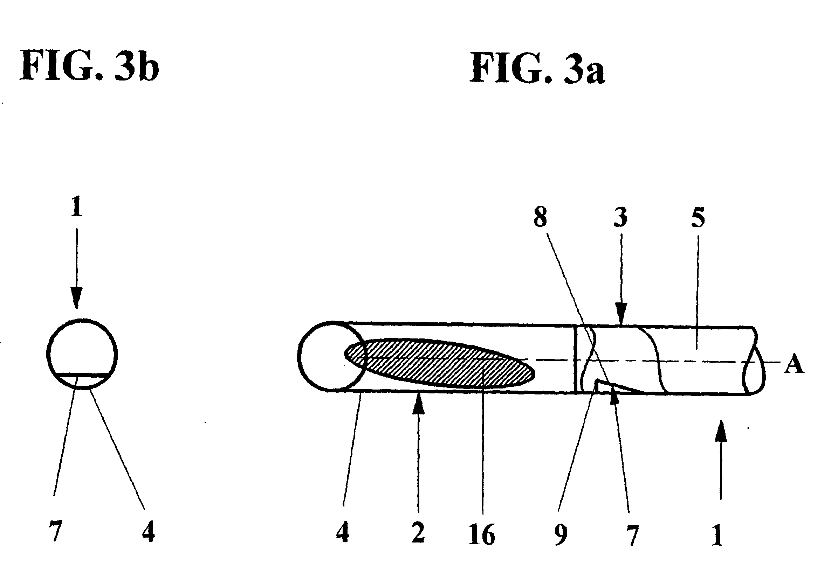

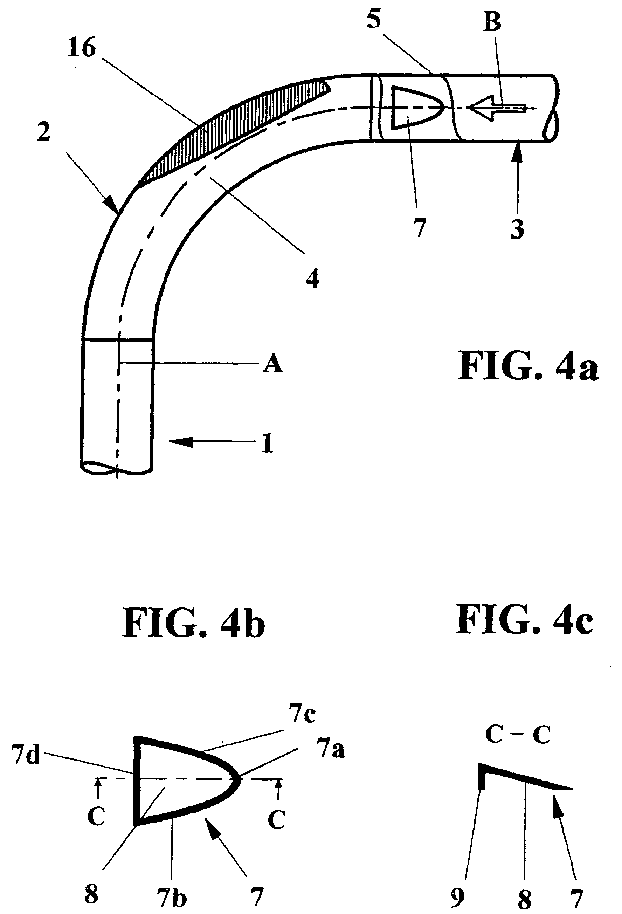

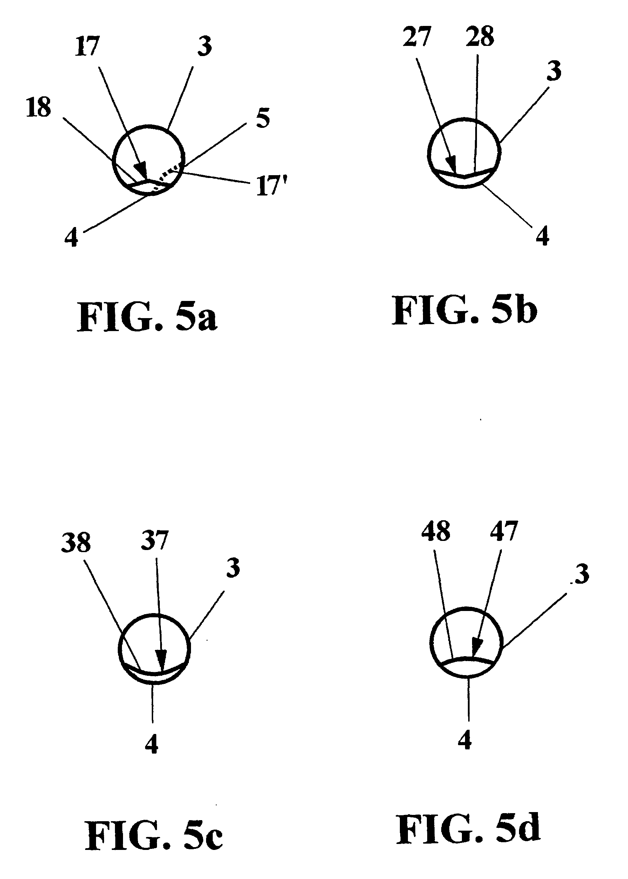

With reference to drawing figures 3a-b and 4a-c the basic principles of the invention shall now be described with the aid of a presently preferred embodiment thereof. At the same time the differences in comparison with conventionally designed pipe systems (Figs. 1-2) shall be explained. In all of these drawing figures, as well as in Figs. 5a-d the invention is clarified by means of very schematical illustrations. It shall be emphasized that the practical design of details may differ from those illustrated, and that such modifications fall within the scope of the invention.

As was stated above, drawing figures 1 and 2 illustrate a portion of a conventional transport pipe 1 of the type normally employed in pneumatic transport systems, for instance in so called "refuse suction systems", for connecting not shown insertion chutes to a central collecting station. The illustrated portion of the transport pipe 1 consists of a first, as seen in the transport direction B of the material, straight section 3, a pipe bend 2 and a second straight section 3. In the illustrated example, as well as in the later discussed embodiments of the present invention, the transport pipe 1 in its entirety is considered being extended horizontally so that the pipe for explanatory purposes may be said to have a general bottom wall 4 and side walls 5, although actually having a circular cross section. It shall be emphasized though, that the conditions discussed herein apply also to a transport pipe extending vertically or inclined relative to the horizontal plane before and after the bend. However, in such a case the later discussed wear areas or "impact areas" will differ from the ones illustrated. This applies also to other situations where a material transport is deflected from its main direction, such as by a branch, where a transport pipe meets another pipe at an angle of for instance 30-50°. The invention may be applied to this kind of branches and therefore also comprises such applications.

It will be experienced that in this kind of transport pipe 1 the transported material, which in the case of domestic waste often contains hard and sharp, sharp-edged fractions, such as pottery, metal, glass, sand and rocks, provides a very restricted area of wear 6 where the most severe and therefore deep abrasion occurs. Expressed otherwise, the material portions provide a very concentrated impact area 6 as they with full force hit the inner circumferential surface of the pipe bend 2, in the outer region of the bend 2. One reason for this concentrated impact area is that the hard and sharp fractions of the material almost always are the heaviest portions of the material and are accordingly transported at the bottom of the pipe, whereas the lighter fractions may take different paths in the pipe.

Naturally, the appearance of the most severe impact area or impact surface will vary depending upon a number of parameters, such as the sharpness of the bend - in the illustrated case the radius of the bend 2 is approximately equal to three times the diameter of the transport pipe - the transport velocity and the type of transported material, but under all conditions the pipe bend is subjected to wear or abrasion over a very restricted surface that in practical operation has been found to be situated in the outer side wall 5 of the pipe bend 2. Where none of the initially discussed and presently employed costly measures are taken this concentrated wear seriously reduces the useful life of the pipe bend 2.

As was stated initially, a basic object of the invention is to provide a simple and appropriate method of combining a desired useful life of the pipe bend with a low cost therefore. To be more precise the object is to achieve this by permitting the use of a pipe bend having a wall thickness that is significantly reduced as compared to the prior art, and/or that is manufactured from a comparatively inexpensive material, for instance the same material as that of the remaining transport pipe. In accordance with the embodiment of the present invention illustrated in Figs. 3a-b and 4a-c this is achieved by means of an enlargement and successive variation of the surface of the pipe bend over which the abrasive or eroding action of the transported material is distributed. This results in a corresponding reduction of the depth of the wear in the area where the maximum wear occurs.

Starting from the conventional transport pipe 1 illustrated in figures 1 and 2 the intended effect of the invention is achieved by providing an impact plate 7 illustrated in drawing figures 3a-b and 4a-c. The impact plate 7 is here illustrated when attached to a forward, with regard to the transport direction B, area of the first straight section 3, and accordingly immediately before the pipe bend 2.It shall be emphasized though, that the invention likewise comprises an attachment of the impact plate in the junction or transitional region between the straight section and the bend or in an entrance area of the actual pipe bend 3.

In the illustrated embodiment the impact plate is attached to the bottom wall 4 of the horizontally extended transport pipe 1, centered in relation to a vertical plane passing through the centre axis A of the transport pipe 1. As will be mentioned further below in connection with an embodiment of the impact plate 17' illustrated in Fig. 5a, this plate may in other applications be provided in other positions around the inner circumferential surface of the transport pipe 1.

The impact plate 7 has an upper impact surface 8 that in the illustrated embodiment is planar, but that for other applications may be given a different shape. This will be described more closely below in connection with drawing figures 5a-d. The plate is attached to the interior of the transport pipe 1 by being fixed, for instance through welding, with its rear edge 7a and side edges 7b, 7c to the interior surface of the pipe 1. Thereby the plate 7 is positioned with its upper impact surface 8 extended at an angle to the center axis of the pipe 1, and more specifically so that this upper surface 8 slopes generally outwardly from the inner circumferential surface of the transport pipe 1, as seen in the transport direction. In the illustrated embodiment an imaginary extension of the impact surface 8 forms an angle of 30° (not specifically illustrated) with the center axis A. However, it shall be emphasized that this angle of inclination may also be varied depending upon the specific circumstances for different applications. Generally, a reduction of the angle reduces the spreading effect and reduces the wear surface 16 to a corresponding degree, whereas an increase of the angle results in an increased wear of the impact plate 7 and finally once more in a reduced spreading effect and in most cases in an undesirable deceleration of the material or even a risk of blocking the pipe. The optimum angle as well as the length of the impact surface 8 must therefore be calculated for each specific case, considering different parameters, such as the expected composition of the transported material, its transport velocity and the radius of the bend 2.

For the purpose of preventing transported material from getting stuck at the impact plate 7, it is important that its rear edge 7a and side edges 7b, 7c are formed so as to closely adjoin or connect to the inner surface of the pipe 1. When used in a circular pipe 1 and in the illustrated angular position they will thereby have the shape illustrated most clearly in fig. 4c. In order to bring the edges of the impact plate 7 to connect to the inner surface of the pipe 1 without any gap therebetween, it may be suitable to chamfer the plate 7 at its rear edge 7a and side edges 7b, 7c, in the manner that with regard to the rear edge is likewise illustrated in fig. 4c. This drawing figure also illustrates that in connection with its forward edge 7d the impact plate 7 may be provided with a support 9 extending down at an angle from the plane of the impact surface 8. This support 9 is intended for attachment to the inner circumferential surface of the transport pipe 1 for supporting the forward edge 7d that through the inclination of the plate will be positioned at a distance above the bottom wall 4 of the transport pipe 1.

In a transport pipe 1 equipped in the manner suggested according to the invention, above all the very erosive portions of the transported material will hit the upper surface 8 of the impact plate 7. Accordingly, the transport direction of at least these portions of the material transported in the pipe 1 will change just before the entrance of the material into the bend 2, or, as mentioned above, in connection with or shortly after its entrance into the bend. The result is that at least these portions of the material will hit the surface of the pipe bend 2 at another position in the bend 2, with regard to the transport direction, than without the contact with the plate 7. As a result of this the surface 16 that is subjected to wear is extended and in each point of the of the wear surface 16 the wear is reduced compared to the conventional maximum wear surface 6, that is the wear or abrasion will be correspondingly shallower. In practice, the wear in each individual point will be reduced even further, since said portions of the material will in most cases hit the inner wall of the bend 2 at a sharper angle, so that the erosive action of the hard and sharp fractions will be reduced in itself. The drawing figures illustrate that the wear surface 16 at the side wall 5 is extended or enlarged both in the circumferential and particularly in the longitudinal direction of the pipe.

The wear surface 16 illustrated in Figs. 3a and 4a refers to a calculated spreading effect with a planar impact plate 7 in the illustrated angular position and when transporting domestic waste at a velocity of approximately 18m/s in a transport pipe 1 having a diameter of 500mm and a bend 2 having a radius corresponding to approximately three times the pipe diameter. It is obvious that the wear surface will have a slightly different appearance when either of these parameters are changed, and especially so in a transport pipe that is extended vertically or is inclined before or after the bend, or at a branch. However, he basic principles of the enlargement or extension of the wear surface will remain the same.

When using the invention it is possible to proceed in different manners in order to obtain the desired effect. According to a first basic alternative, the transport pipe 1 is provided with an impact plate 7 from the start, prior to being put into operation. Where possible, the impact plate is in this case preferably dimensioned so as to have approximately the same useful life as the pipe bend 2. However, as was mentioned above, when required it is possible to provide two or even more impact plates 7 after each other, such that a new plate 7 becomes active when the immediately preceding plate becomes worn down. This is an alternative to the later described retrofitting of new replacement plates in cases where it is not possible to dimension the impact plate for the same useful life as the actual pipe bend.

In another embodiment one or several impact plates 7 are retrofitted in an existing transport pipe 1 being in operation. This alternative may be used either in order to supplement an old system, in order to thereby afterwards extend its useful life beyond the one that was once planned, or to replace a worn out plate in a system that was from the beginning provided with an impact plate 7. This may become necessary where it has not been possible to dimension the originally attached impact plate for the required useful life or in case the wear for some reason, such as a changed composition or nature of the transported material, has been more severe than expected. In this connection it may also be noted that in one respect the wear of the impact plate may also have a positive effect. Through the successive wear of the plate its altered impact surface will result in a changed influence upon particularly the hard and sharp material fractions, and accordingly in a successively changed "impact area" that in time further increases the distribution or spreading of the impacts of the material with the bend.

Figs. 5a and 5b illustrate alternative embodiments of the impact plate 17, 17' and 27 respectively, suggested in accordance with the invention. In this case the upper impact surface 18 and 28 respectively of the plate is angled, either in a direction upwardly from - the surface 18 - or downwardly towards - the surface 28 - the bottom wall 4. With such a design it is possible under certain circumstances, that is depending upon the transport velocity and the material composition, to favorably influence the spreading action. The same applies to the embodiment indicated with a dash-dot line in Fig. 5a, where the position of the impact plate 17' has been moved upwardly towards the side wall 5 of the pipe 1. With regard to the angle of the upper surface 18, 28 and to the positioning of the plate 17' around the circumference, the exact values providing the optimum result must be calculated for each separate case, for instance based on the above stated parameters.

Fig. 5c and 5d illustrate further alternative designs of the impact plates 37 and 47 respectively, according to the invention. In these cases the impact plates are formed with an upper impact surface having a downwardly - the surface 38 - or upwardly - the surface 48 - curved shape. In principle the same considerations apply to these embodiments as to the variants of Figs. 5a and 5b, whereby the position of the plate around the circumference may be changed in this case too. Other, not illustrated, shapes of the impact plate may likewise be used within the scope of the invention, provided that they produce the effects suggested in accordance with the invention, namely the change of transport direction for at least portions of the transported material, and thereby the desired spreading of its "impact area" on the inner wall of the pipe bend.

Figures 5a-d illustrate an impact plate that is angled and curved respectively, generally in the longitudinal direction of the plate. It shall be emphasized though, that within the scope of the invention the impact plate may also be designed so that it is angled and curved respectively, in a transversal direction for providing an angle of inclination for the upper impact surface that varies along the length of the plate.

The invention is presently regarded as having its major field of application in connection with so-called refuse suction systems, that is pneumatic transport systems for domestic waste. The invention likewise covers an application of its basic principles to pneumatic transport systems used within other areas, such as for industrial waste, waste from restaurants and hospital waste.

In all such cases the use of every one of the embodiments discussed herein basically provides for an extended useful life of the pipe system, and at a relatively low cost.

It will be understood by those skilled in the art that various modifications and changes may be made to the present invention without departure from the scope thereof, which is defined by the appended claims.

## Claims

1. A transport pipe (1) of a pneumatic refuse suction system comprising at least one bend (2) and means fixed to the inner circumferential surface of the transport pipe (1) and extended into the transport path of the material transported in the transport pipe (1) for the purpose of reducing the wear of the pipe bend and having a rear, as seen in the transport direction, edge (7a) that is provided substantially on a level with and is fixed to the inner circumferential surface of the transport pipe (1), side edges (7b, 7c) and a forward edge (7d) provided at a distance from the inner circumferential surface of the transport pipe (1), whereby said means for reducing wear is a single active material deflecting plate (7; 17; 17'; 27; 37; 47) provided in an area that, seen in the transport direction, lies just before, at or just after the junction between a substantially straight section (3) and a bend (2) of the transport pipe (1) and an upper impact surface (8; 18; 28; 38; 48) of the deflecting plate slopes generally away from the inner circumferential surface of the transport pipe (1), as seen in the transport direction, so that an imaginary extension thereof forms an angle with the center axis (A) of the transport pipe, whereby portions of the transported material that hit the deflecting plate will experience a change in their transport direction so that wear will be distributed over an enlarged area of the bend, **characterized in that** the side edges (7b, 7c) of the deflecting plate are fixed to the inner circumferential surface of the transport pipe (1).

2. A transport pipe (1) according to claim 1, which before the pipe bend (2) is extended substantially horizontally, **characterized in that** the deflecting plate (7; 17; 27; 37; 47) is provided at a position around the inner circumference of the transport pipe (1) that, with regard to the material transport, corresponds to a bottom surface (4) thereof.

3. A transport pipe (1) according to claim 1 which before the pipe bend (2) is extended substantially horizontally, **characterized in that** the deflecting plate (17') is provided at a position around the inner circumference of the transport pipe (1) that, with regard to the material transport, corresponds to a side surface (5) of the transport pipe (1).

4. A transport pipe (1) according to any of claims 1-3, **characterized in that** the deflecting plate (7) is formed having a planar upper impact surface (8).

5. A transport pipe (1) according to any of claims 1-3, **characterized in that** the deflecting plate (17; 17'; 27) is formed having an angled upper impact surface (18; 28).

6. A transport pipe (1) according to any of claims 1-3, **characterized in that** the deflecting plate (37; 47) is formed having a curved upper impact surface (48).

7. A transport pipe (1) according to any of claims 1-6, **characterized by** at least one further deflecting plate (7; 17; 27; 37; 47) provided after the single active deflecting plate, as seen in the transport direction, in the same position around the inner circumference of the transport pipe (1) and intended to be put into operation as the immediately preceding plate becomes worn and loses its function.

8. A method of extending the useful life of a transport pipe (1) of a pneumatic refuse suction system containing at least one bend (2), whereby means are fixed with a rear edge thereof, seen in the transport direction, to the inner circumferential surface of the transport pipe (1) and are provided so as to extend into the transport path of the material transported in the transport pipe (1) for the purpose of reducing the wear of the pipe bend, a single active material deflecting plate (7; 17; 17'; 27; 37; 47) being provided in an area that, seen in the transport direction, lies just before, at or just after the junction between a substantially straight section (3) and a bend (2) of the transport pipe (1), said deflecting plate being positioned so that an upper impact surface (8; 18; 28; 38; 48) thereof slopes generally away from the inner circumferential surface of the transport pipe (1), as seen in the transport direction, so that an imaginary extension thereof forms an angle with the center axis (A) of the transport pipe, thereby changing the transport direction of portions of the transported material that hit the deflecting plate, so that wear will be distributed over an enlarged area of the bend, said deflecting plate further having side edges fixed to the inner circumferential surface of the transport pipe.

9. A method according to claim 8, by a transport pipe (1) that before the pipe bend (2) is extended substantially horizontally, **characterized in that** the deflecting plate (7; 17; 17'; 27; 37; 47) is provided at a position around the inner circumference of the transport pipe (1) that, with regard to the material transport, corresponds to a bottom surface (4) thereof.

10. A method according to claim 8, by a transport pipe (1) that before the pipe bend (2) is extended substantially horizontally, **characterized in that** the deflecting plate (7; 17; 17'; 27; 37; 47) is provided at a position around the inner circumference of the transport pipe (1) that, with regard to the material transport, corresponds to a side surface (5) thereof

11. A method according to any of claims 8-10, **characterized by** providing at least one further deflecting plate (7; 17; 27; 37; 47 after the single active deflecting plate, as seen in the transport direction, in the same position around the inner circumference of the transport pipe (1) said further plate becoming active when the immediately preceding plate becomes worn and loses its function.

12. A method according to any of claims 8-11, **characterized in that** the deflecting plate or plates (7; 17; 17'; 27; 37; 47) is (are) fixed to the inner circumferential surface of the transport pipe (1)before the transport pipe is put into operation.

13. A method according to any of claims 8-11, **characterized in that** the deflecting plate or plates (7; 17; 17'; 27; 37; 47) is (are) retrofitted in an existing transport pipe (1) after it has been put into operation.

14. A method according to claim 13, **characterized in that** the deflecting plate or plates (7; 17; 17'; 27; 37; 47) is (are) fixed to the inner circumferential surface of the transport pipe (1) after the pipe has been in operation for a predetermined period of time or after a specified, maximum allowed wear has been measured in a bend (2).

## Patentansprüche

1. Transportrohr (1) eines pneumatischen Abfallansaugsystems mit mindestens einer Krümmung (2) und einem Mittel, das an der inneren umfänglichen Oberfläche des Transportrohres (1) befestigt ist und sich in den Transportweg des in dem Transportrohr (1) transportierten Materials erstreckt, um die Abnutzung der Rohrkrümmung zu verringern, und mit einer in Transportrichtung rückwärtigen Kante (7a), die im Wesentlichen in einer Ebene und an der inneren umfänglichen Oberfläche des Transportrohres (1) bereitgestellt ist, Seitenkanten (7b, 7c) und einer vorderen Kante (7d), die in einem Abstand von der inneren umfänglichen Oberfläche des Transportrohres (1) ausgebildet ist, wobei das Mittel zum Verringern der Abnutzung ein einzelnes wirksames Materialablenkblech (7; 17; 17'; 27; 37; 47) ist, das in einem Bereich bereitgestellt ist, der in Transportrichtung genau vor, an oder genau hinter der Verbindung zwischen einem im Wesentlichen geraden Abschnitt (3) und einer Krümmung (2) des Transportrohres (1) liegt, und eine obere Aufschlagfläche (8; 18; 28; 38; 48) des Anlenkblechs in Transportrichtung allgemein von der inneren umfänglichen Oberfläche des Transportrohres (1) wegweisend ist, so dass eine gedachte Verlängerung davon einen Winkel zu einer Mittelachse (A) des Transportrohres bildet, wobei Teile des transportierten Materials, die auf das Ablenkblech treffen, ihre Transportrichtung ändern, so dass sich die Abnutzung über einen größeren Bereich der Krümmung verteilt, **dadurch gekennzeichnet, dass** die Seitenkanten (7b, 7c) des Ablenkblechs an der inneren umfänglichen Oberfläche des Transportrohres (1) befestigt sind.

2. Transportrohr (1) nach Anspruch 1, das sich vor der Rohrkrümmung (2) im Wesentlichen horizontal erstreckt,
**dadurch gekennzeichnet, dass**
das Ablenkblech (7; 17; 27; 37; 47) an einer Stelle um den inneren Umfang des Transportrohres (1) bereitgestellt ist, die im Hinblick auf den Materialtransport dessen Bodenfläche (4) entspricht.

3. Transportrohr (1) nach Anspruch 1, das sich vor der Rohrkrümmung (2) im Wesentlichen horizontal erstreckt,
**dadurch gekennzeichnet, dass**
das Ablenkblech (17') an einer Stelle um den inneren Umfang des Transportrohres (1) bereitgestellt ist, die im Hinblick auf den Materialtransport einer Seitenfläche (5) des Transportrohres (1) entspricht.

4. Transportrohr (1) nach einem der Ansprüche 1 bis 3,
**dadurch gekennzeichnet, dass**
das Ablenkblech (7) mit einer ebenen oberen Aufschlagfläche (8) ausgebildet ist.

5. Transportrohr (1) nach einem der Ansprüche 1 bis 3,
**dadurch gekennzeichnet, dass**
das Ablenkblech (17; 17'; 27) mit einer winkligen oberen Aufschlagfläche (18; 28) ausgebildet ist.

6. Transportrohr (1) nach einem der Ansprüche 1 bis 3,
**dadurch gekennzeichnet, dass**
das Ablenkblech (37, 47) mit einer gebogenen oberen Aufschlagfläche (48) ausgebildet ist.

7. Transportrohr (1) nach einem der Ansprüche 1 bis 6,
**gekennzeichnet durch**
mindestens ein weiteres Ablenkblech (7; 17; 27; 37; 47), das in Transportrichtung hinter dem einzelnen wirksamen Materialablenkblech an derselben Stelle um den inneren Umfang des Transportrohres (1) bereitgestellt ist, und in Betrieb genommen werden soll, wenn das unmittelbar vorausgehende Blech abgenutzt ist und seine Funktion verliert.

8. Verfahren zum Verlängern der Nutzungsdauer eines Transportrohres (1) eines pneumatischen Abfallansaugsystems mit mindestens einer Krümmung (2), wobei Mittel mit deren rückwärtigen Kanten in Transportrichtung an der inneren umfänglichen Oberfläche des Transportrohres (1) befestigt und so bereitgestellt sind, dass sie sich in den Transportweg des Materials erstrecken, das in dem Transportrohr (1) transportiert wird, um die Abnutzung der Rohrkrümmung zu verringern, wobei das einzelne wirksame Materialablenkblech (7; 17; 17'; 27; 37; 47) in einem Bereich bereitgestellt ist, der in Transportrichtung genau vor, an oder genau hinter der Verbindung zwischen einem im Wesentlichen geraden Abschnitt (3) und einer Krümmung (2) des Transportrohres (1) liegt, wobei das Ablenkblech so angeordnet ist, dass dessen obere Aufschlagfläche (8; 18; 28; 38; 48) in Transportrichtung allgemein von der inneren umfänglichen Oberfläche des Transportrohres (1) wegweisend ist, so dass seine gedachte Verlängerung einen Winkel zur Mittelachse (A) des Transportrohres bildet, und dadurch die Transportrichtung der Teile des transportierten Materials geändert wird, das auf das Ablenkblech auftrifft, so dass Abnutzung über einen größeren Bereich der Krümmung verteilt wird, wobei das Ablenkblech weiter Seitenkanten hat, die an der inneren umfänglichen Oberfläche des Transportrohres befestigt sind.

9. Verfahren nach Anspruch 8 durch ein Transportrohr (1), das sich vor der Rohrkrümmung (2) im Wesentlichen horizontal erstreckt,
**dadurch gekennzeichnet, dass**
das Ablenkblech (7; 17; 17'; 27; 37; 47) an einer Stelle um den inneren Umfang des Transportrohres (1) bereitgestellt ist, die im Hinblick auf den Materialtransport dessen Bodenfläche (4) entspricht.

10. Verfahren nach Anspruch 8 durch ein Transportrohr (1), das sich vor der Rohrkrümmung (2) im Wesentlichen horizontal erstreckt,
**dadurch gekennzeichnet, dass**
das Ablenkblech (7; 17; 17'; 27; 37; 47) an einer Stelle um den inneren Umfang des Transportrohres (1) bereitgestellt ist, die im Hinblick auf den Materialtransport einer seiner Seitenflächen (5) entspricht.

11. Verfahren nach einem der Ansprüche 8 bis 10,
**dadurch gekennzeichnet, dass**
mindestens ein weiteres Ablenkblech (7; 17; 27; 37; 47) in Transportrichtung hinter dem einzelnen wirksamen Materialablenkblech an derselben Stelle um den Innenumfang des Transportrohres (1) bereitgestellt ist, wobei das weitere Blech wirksam wird, wenn das unmittelbar vorausgehende Blech abgenutzt ist und seine Funktion verliert.

12. Verfahren nach einem der Ansprüche 8 bis 11,
**dadurch gekennzeichnet, dass**
das Ablenkblech oder die Bleche (7; 17; 17'; 27; 37; 47) an der inneren umfänglichen Oberfläche des Transportrohres (1) befestigt wird/werden, bevor das Transportrohr in Betrieb genommen wird.

13. Verfahren nach einem der Ansprüche 8 bis 11,
**dadurch gekennzeichnet, dass**
das Ablenkblech oder die Bleche (7; 17; 17'; 27; 37; 47) in einem vorhandenen Transportrohr (1) nachgerüstet wird/werden, nachdem es in Betrieb genommen wurde.

14. Verfahren nach Anspruch 13,
**dadurch gekennzeichnet, dass**
das Ablenkblech oder die Bleche (7; 17; 17'; 27; 37; 47) an der inneren umfänglichen Oberfläche des Transportrohres (1) befestigt wird/werden, nachdem das Rohr während einer bestimmten Dauer in Betrieb genommen wurde oder nachdem eine bestimmte, maximal zulässige Abnutzung in einer Krümmung (2) gemessen wurde.

## Revendications

1. Tuyau de transport (1) d'un système pneumatique d'aspiration de rejets comprenant au moins un coude (2) et un moyen fixé à la surface circonférentielle interne du tuyau de transport (1) et s'étendant dans le passage de transport du matériau transporté dans le tuyau de transport (1) dans le but de réduire l'usure du coude de tuyau et présentant un bord arrière (7a), vu dans le sens de transport qui est prévu à un niveau et qui est fixé à la surface circonférentielle du tuyau de transport (1), des bords latéraux (7b, 7c) et un bord avant (7d) prévu à une distance de la surface circonférentielle interne du tuyau de transport (1), le dit moyen de réduction de l'usure est une plaque unique de déflection de matériau actif (7, 17; 17'; 27; 37; 47) prévue dans une zone qui, vue dans le sens de transport, se trouve juste avant ou juste après la jonction entre une section essentiellement droite (3) et un coude (2) du tuyau de transport (1) et une surface supérieure d'impact (8; 18; 28; 38; 48) de la plaque de déflexion descend en pente généralement en s'éloignant de la surface intérieure circonférentielle du tuyau de transport (1), tel que vu dans le sens de direction, de sorte qu'une extension imaginaire forme un angle avec l'axe central (A) du tuyau de transport, des parties du matériau transporté qui heurtent la plaque déflectrice vont subir un changement de direction de transport de sorte que l'usure va être répartie sur une zone élargie du coude, **caractérisé en ce que** les bords latéraux (7b, 7c) de la plaque déflectrice sont fixés sur la surface intérieure circonférentielle du tuyau de transport (1).

2. Tuyau de transport (1) selon la revendication 1, qui s'étend essentiellement à l'horizontale avant le coude de tuyau (2)
**caractérisé en ce que**
la plaque déflectrice (7; 17; 27; 37; 47) est prévue à une position autour de la circonférence interne du tuyau de transport (1) qui correspond à une surface du fond (4) du tuyau de transport (1).

3. Tuyau de transport (1) selon la revendication 1, qui s'étend essentiellement à l'horizontale avant le coude de tuyau (2)
**caractérisé en ce que**
la plaque déflectrice (17') est prévue à une position autour de la circonférence interne du tuyau de transport (1) qui correspond à une surface latérale (5) du tuyau de transport (1).

4. Tuyau de transport (1) selon l'une des revendications 1 à 3,
**caractérisé en ce que**
la plaque déflectrice (7) est réalisée pour avoir une surface supérieure planaire d'impact (8).

5. Tuyau de transport (1) selon l'une des revendications 1 à 3,
**caractérisé en ce que**
la plaque déflectrice (17; 17'; 27) est réalisée pour avoir une surface d'impact supérieure angulaire (18; 28).

6. Tuyau de transport (1) selon l'une des revendications 1 à 3,
**caractérisé en ce que**
la plaque déflectrice (37; 47) est réalisée avec une surface d'impact supérieure incurvée (48).

7. Tuyau de transport (1) selon l'une des revendications 1 à 6,
**caractérisé par**
au moins une autre plaque déflectrice (7; 17; 27; 37; 47) prévue après la plaque unique déflectrice active, vue dans le sens dans transport, dans la même positon autour de la circonférence interne du tuyau de transport (1) et destinée à être mise en oeuvre dés que la plaque précédente commence à s'user et perd sa fonction.

8. Procédé pour étendre la vie utile d'un tuyau de transport (1) d'un système pneumatique d'aspiration contenant au moins un coude (2), des moyens étant fixés par un bord arrière vu dans le sens de transport à la surface intérieure circonférentielle du tuyau de transport (1) et étant prévus de manière à s'étendre dans le passage de transport du matériel transporté dans le tuyau de transport (1) dans l'objectif de réduire l'usure du coude de tuyau, une plaque unique de déflection de matériau actif (7, 17; 17'; 27; 37; 47) étant prévue dans une zone qui, vue dans le sens de transport, se trouve juste avant ou juste après la jonction entre une section essentiellement droite (3) et un coude (2) du tuyau de transport (1), la dite plaque déflectrice étant positionnée de sorte qu'une surface supérieure d'impact (8; 18; 28; 38; 48) de la plaque de déflexion descend en pente généralement en s'éloignant de la surface intérieure circonférentielle du tuyau de transport (1), tel que vu dans le sens de direction, de sorte qu'une extension imaginaire forme un angle avec l'axe central (A) du tuyau de transport, changeant ainsi le sens de transport des parties du matériau transporté qui heurtent la plaque déflectrice de sorte que l'usure va être répartie sur une zone élargie du coude, la dite plaque déflectrice ayant en outre des bords latéraux fixés sur la surface circonférentielle intérieure du tuyau de transport.

9. Procédé selon la revendication 8 pour revendiquer un tuyau de transport (1) qui s'étend essentiellement à l'horizontale avant le coude de tuyau (2)
**caractérisé en ce que**
la plaque déflectrice (7; 17; 17'; 27; 37; 47) est prévue à une position autour de la circonférence interne du tuyau de transport (1) qui correspond à une surface de fond (4).

10. Procédé selon la revendication 8 pour revendiquer un tuyau de transport (1) qui s'étend essentiellement à l'horizontale avant le coude de tuyau (2)
**caractérisé en ce que**
la plaque déflectrice (7; 17; 17'; 27; 37; 47) est prévue à une position autour de la circonférence interne du tuyau de transport (1) qui correspond à une surface latérale (5) du tuyau de transport (1).

11. Procédé selon l'une des revendications 8 à 10,
**caractérisé en ce**
**qu'**il est prévu au moins une plaque déflectrice (7; 17; 27; 37; 47) après la plaque déflectrice unique active comme vu dans le sens de transport, dans la même position autour de la circonférence interne du tuyau de transport (1), ladite autre plaque devenant active quand la plaque précédente devient usée et perd sa fonction.

12. Procédé selon l'une des revendications 8 à 11,
**caractérisé en ce que**
la ou les plaques déflectrices (7; 17; 17'; 27; 37; 47) est/sont fixée(s) à une surface intérieure circonférentielle du tuyau de transport (1) avant que le tuyau de transport ne soit mis en service.

13. Procédé selon l'une des revendications 8 à 11,
**caractérisé en ce que**
la ou les plaques déflectrices (7; 17; 17'; 27; 37; 47) est/sont refixées dans un tuyau de transport existant (1) après la mise en service de ce dernier.

14. Procédé selon l'une des revendications 8 à 11,
**caractérisé en ce que**
la ou les plaques déflectrices (7; 17; 17'; 27; 37; 47) est/sont fixée(s) à une surface intérieure circonférentielle du tuyau de transport (1) après que le tuyau soit mis en fonction pour une période de temps prédéterminée ou après une usure maximale spécifiée soit mesurée dans un coude (2).
